(19)

**Europäisches Patentamt**

**European Patent Office**

**Office européen des brevets**

(11) **EP 4 607 204 A1**

(12) **EUROPEAN PATENT APPLICATION**

(43) Date of publication:
**27.08.2025 Bulletin 2025/35**

(21) Application number: **24158631.2**

(22) Date of filing: **20.02.2024**

(51) International Patent Classification (IPC):
***G01N 35/10*** *(2006.01)*

(52) Cooperative Patent Classification (CPC):
**G01N 35/1016; B01L 3/021;** B01L 2200/141;
B01L 2200/148; B01L 2300/0681

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **F. Hoffmann-La Roche AG**
**4070 Basel (CH)**
Designated Contracting States:
**AL AT BE BG CH CY CZ DK EE ES FI FR GB GR
HR HU IE IS IT LI LT LU LV MC ME MK MT NL NO
PL PT RO RS SE SI SK SM TR**

• **Roche Diagnostics GmbH**
**68305 Mannheim (DE)**
Designated Contracting States:
**DE**

(72) Inventor: **MEIER, Alexander Heinz**
**6343 Rotkreuz (CH)**

(74) Representative: **Merkel, Patrick**
**Roche Diagnostics GmbH**
**Sandhofer Strasse 116**
**68305 Mannheim (DE)**

(54) **METHODS FOR INCREASED PIPETTING SURVEILLANCE SENSITIVITY AND SYSTEMS FOR PERFORMING THE SAME**

(57) Described herein are methods for pipetting liquids using a pipet comprising a disposable pipet tip having a filter using pressure data calibration for improved pipetting surveillance sensitivity and/or identifying defective pipets.

EP 4 607 204 A1

## Description

## Field of the Invention

The invention generally relates to methods for pipetting liquids using pipets comprising disposable pipet tips having a filter using pressure data calibration for improved pipetting surveillance sensitivity and/or identifying defective pipets.

## Background

Instruments are used for molecular diagnostics and life science research and development to perform sample pipetting and processing (e.g., mixing sample with reagents) using disposable pipet tips (e.g., x800 family, MagNA Pure 24/96 systems). To assess the quality of the pipetting step, the pressure inside the pipet is usually measured during the liquid pipetting step and analyzed to detect anomalies. However, the disposable pipet tips often used typically include an aerosol filter to avoid cross contamination between samples and these filters may have varying pressure resistance which can cause difficulties when detecting anomalies in the sample pipetting process.

## Summary

One aspect of the invention relates to methods of calibrating a pipet having an interior volume and a disposable pipet tip and a filter separating the interior volume between the disposable pipet tip and the pipet, the method comprising performing at least one air aspiration of the pipet with defined pipetting parameters and measuring air pressure in the interior volume of the pipet.

Another aspect of the invention relates to systems and subsystems configured to perform the methods described herein including the additional process steps of performing at least one air aspiration of the pipet with defined pipetting parameters and measuring air pressure in the interior volume of the pipet.

The foregoing has outlined some of the aspects of the present invention. These aspects should be construed strictly as illustrative of some of the more prominent features and applications of the invention, rather than as limitations on the invention. Many other beneficial results can be obtained by modifying the embodiments within the scope of the invention. Accordingly, for other objects and a full understanding of the invention, refer to the summary of the invention, the detailed description describing the preferred embodiment in addition to the scope of the invention defined by the claims and the accompanying drawings. The unique features characteristic of this invention and operation will be understood more easily with the description and drawings. It is to be understood that the drawings are for illustration and description only.

## Short description of the figures

**Figure 1** is a graph of pressure in pipets during air aspirations with defined pipetting parameters.
**Figure 2** is a graph of the uncalibrated pressure in pipets during liquid aspirations.
**Figure 3** is a graph of velocity dependent pressure to calibrate pressure measured from the pipets.
**Figure 4** is a graph of the calibrated pressure inside the pipets during liquid aspiration.

## Detailed description

In the following description, for purposes of explanation, specific details are set forth in order to provide a thorough understanding of different aspects of the present invention. It will be evident, however, to one skilled in the art that the present invention as defined by the claims may include some or all of the features or embodiments herein described and may further include obvious modifications and equivalents of the features and concepts described herein.

## Definitions:

As used herein, the singular forms "a", "an" and "the" include plural referents unless the context clearly dictates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect and "about" is utilized herein to represent an inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue. It will be further understood that the endpoints of each of the ranges are significant both in relation to the other endpoint, and independently of the other endpoint. As used in the claims herein, the term "about" in claims refers to a +/- 10% variation from the nominal value. It is to be understood that such a variation is always included in any given value provided herein, whether or not it is specifically referred to.

Terms used herein, such as "aspect" or "embodiment" or "exemplary" or "exemplified," are not meant to show preference, but rather to explain that the aspect discussed thereafter is merely one example of the aspect presented.

Additionally, as used herein, relative terms, such as "substantially", "generally", "approximately", and the like, are utilized herein to represent an inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue. As used in the claims herein, the term "substantially" in claims refers to a +/-10% variation from the nominal value. It is to be understood that such a variation is always included in any given value provided herein, whether or not it is specifically referred to.

The term "connected to" includes connected directly or indirectly.

As used herein, the terms "optional" or "optionally" mean that the subsequently described event or circumstance may or may not occur or the component might be omitted, and that the description includes instances where the event or circumstance occurs and instances where it does not or when the component is present or not present.

The invention relates generally to improved methods for pipetting liquids and systems configured for performing the same.

One aspect of the invention relates to methods of performing pipetting of liquids providing for improved surveillance sensitivity, preferably by reducing the errors and/or data spread caused by pipet filter variations and/or other pipet defects.

One embodiment of the invention relates to a method of calibrating a pipet having an interior volume and a filter enclosing the interior volume, the method comprising performing at least one air aspiration of the pipet with defined pipetting parameters and measuring air pressure in the interior volume of the pipet.

Accordingly, the method of calibrating is preferably performed repeatedly by a pipetting instrument for up to 10 different disposable pipet tips, preferably up to 50 different disposable pipet tips, more preferably up to 100 different disposable pipet tips and most preferably up to 1000 different disposable pipet tips, preferably automatically.

Preferably, the defined pipetting parameters are selected from jerk, acceleration, velocity, and/or volume. The term "jerk" refers to the rate of change of the "acceleration" at the beginning and end of the aspiration. The term "acceleration" refers to the rate of change of the "velocity" at the beginning and end of the aspiration. The term "velocity" refers to rate of gas flow during the aspiration. The term "volume" refers to amount of air or gas.

More preferably, the defined pipetting parameters includes acceleration and velocity. According to preferred embodiments, the filter is an aerosol filter.

According to one embodiment, the pipet filters have varying pressure resistance from pipet tip to pipet tip (i.e., the filter resistance of filter A in deposable pipet A is different from the filter resistance of filter B in disposable pipet B) which can cause difficulties to detecting anomalies in the sample pipetting process. According to the present invention, after each pipet tip pick up by the device component handling the pipets and before sample pipetting the pipetting device performs an air aspiration with a given acceleration and velocity to measure the filter resistance. This measured filter resistance is then used to calibrate the pressure signal measured during the sample pipetting/processing based a pipetting parameters (jerk, acceleration, velocity, volume). This significantly reduces the spread in the measured pressure curves and therefore improves the performance of the pipetting surveillance.

The following is a detailed description of the calibration process according to one embodiment of the invention:

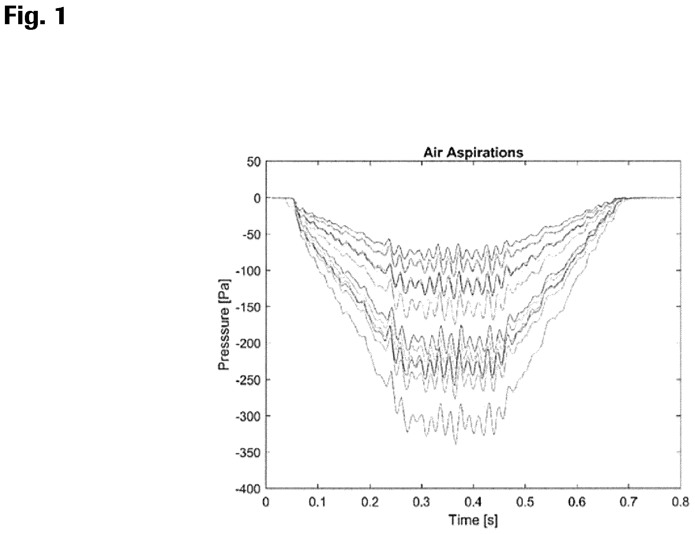

(1) Perform an air aspiration with defined pipetting parameters (jerk, acceleration, velocity, volume) and measure the pressure in the pipetting device $P_{air}(t)$, as shown in Fig 1. Fig. 1 shows pressure [Pa] within the pipet volume over time [s] during air aspirations according to the invention.

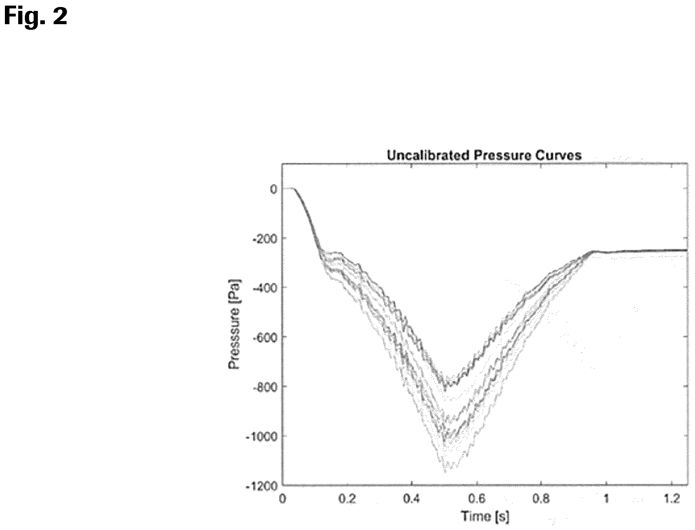

(2) Perform the liquid aspiration with defined pipetting parameters (jerk, acceleration, velocity, volume) and measure the pressure inside the pipetting device $P_{asp}(t)$, as shown in Fig 2. Fig. 2 shows pressure [Pa] (uncalibrated) within the pipet volume over time [s] during liquid aspirations.

(3) Estimate filter resistance: During the air aspiration (1), when reaching a constant aspiration velocity $V_{asp}$ with the pipetting device, the flow velocity through the aerosol filter is constant and identical to the aspiration velocity. During this phase, $P_{air}$ (t@v=const.) is also constant (signal variations stemming from the pipetting device can be averaged or the pressure can be estimated using other suitable methods, e.g., median filtering). The pressure drop $\Delta p = P_{air}(t@v=const.) - P_{air}(0)$ measured with the pressure sensor can then be converted to a filter resistance $R_F$ using known aspiration velocity:

$$R_F = \Delta p / V_{asp}$$

Depending on the aspiration jerk, acceleration and volume, a phase with constant velocity will not always reached during the aspiration. In such cases, the maximal aspiration velocity can be calculated from the jerk, acceleration and aspiration volume and the maximum measured pressure drop can be used to calculate the filter resistance as well.

(4) Calibrate the liquid aspirations:

1. Calculate the aspiration velocity as a function of time of the pipetting device $V_{asp}(t)$ based on the aspiration parameters (jerk, acceleration, velocity, volume)

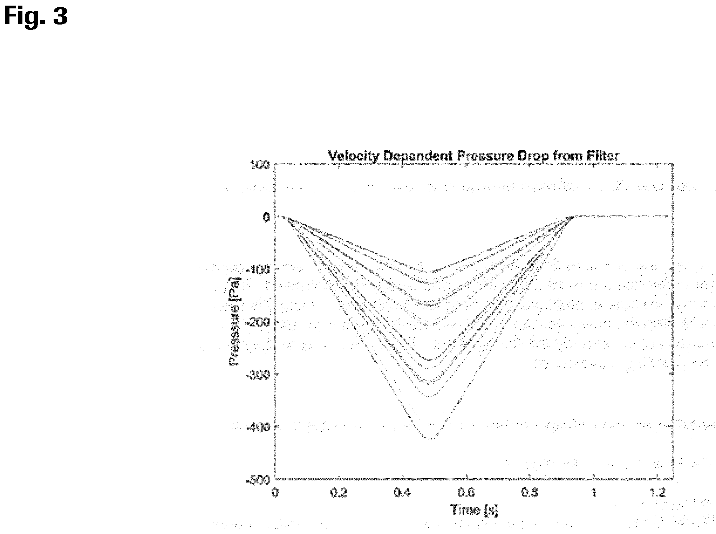

2. Using $V_{asp}(t)$ and the measured filter resistance $R_F$, calculate the pressure drop generated by the filter as a function of time $\Delta P_{Filter}(t)$ during the aspiration (as shown in Fig. 3):

$$\Delta P_{Filter}(t) = R_F * V_{asp}(t)$$

Fig. 3 shows the velocity pressure [Pa] drop caused by the filters within the pipet.

3. Calibrate the measured pressure during the aspiration process $P_{asp}(t)$ with the calculated pressure drop of the filter $\Delta P_{Filter}(t)$:

$$P_{calibrated}(t) = P_{asp}(t) - \Delta P_{Filter}(t)$$

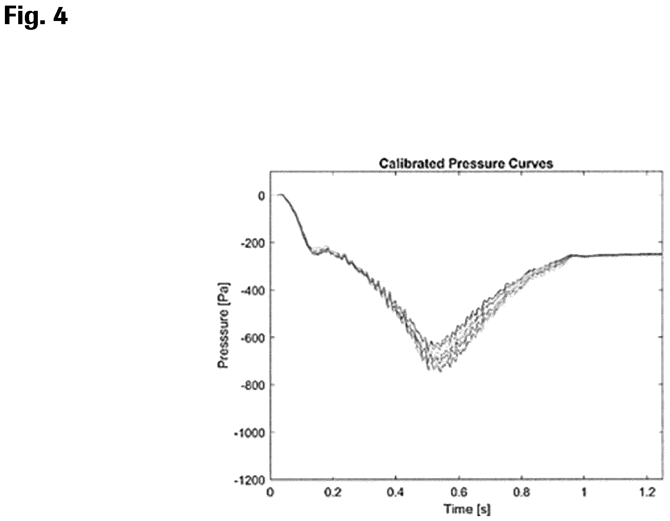

5) Any pressure based pipetting surveillance can now be performed using $P_{calibrated}(t)$. Fig. 4 shows the calibrated pressure inside the pipets during liquid aspiration. As shown, the spread in the data is reduced by approximately 400Pa.

Thus, the methods set forth herein improved surveillance sensitivity, preferably by reducing the errors and/or data spread caused by pipet filter variations and/or other pipet defects.

Another embodiment of the invention relates to a method of pipetting an amount of a liquid using a pipet having an interior volume and a disposable pipet tip having a filter enclosing the interior volume, wherein the filter has a filter resistance, the method comprising:

(a) performing at least one air aspiration of the pipet with defined pipetting parameters and measuring air pressure in the interior volume of the pipet;
(b) estimating the filter resistance of the filter of the disposable pipet tip using the measured air pressure and the defined pipetting parameters;
(c) performing aspiration of the liquid with defined pipetting parameters and measuring liquid aspiration pressure in the interior volume of the pipet;
(d) correcting the liquid aspiration pressure using the estimated filter resistance of the pipet and the defined pipetting parameters; and
(e) using the corrected liquid aspiration pressure to determine if the pipetting of the amount of the liquid was acceptable or unacceptable.

The terms "acceptable/unacceptable" depends on the error ranges allowed by the method (e.g., deviations larger than $\pm 10\%$ or $\pm 20\%$ in aspirated volume are not acceptable according to preferred embodiments).

Preferably, the defined pipetting parameters are selected from jerk, acceleration, velocity, and/or volume. More preferably, the defined pipetting parameters includes acceleration and velocity.

According to preferred embodiments, the performing at least one air aspiration is at a selected acceleration and velocity to measure the filter resistance.

According to preferred embodiments, the filter is an aerosol filter.

Preferably, the liquid is from a sample and the filter is configured to avoid sample cross contamination.

Preferably, the method further comprises processing the liquid in the interior volume of the pipet. Preferably, the method further comprises mixing the liquid in the interior volume of the pipet. According to one preferred embodiment, the performing at least one air aspiration comprises reaching a constant air aspiration velocity with the pipet and a constant air flow velocity through the filter. Preferably, the air aspiration velocity is in the same order of magnitude as the aspiration velocity during the liquid aspiration, the volume preferably sufficiently large to reach a constant air flow through the filter for 0.1seconds to achieve a reliable measurement of the filter resistance.

According to another preferred embodiment, the measuring air pressure in the interior volume of the disposable pipet is performed using at least one pressure sensor.

Preferably, the method further comprises calibrating the aspiration of the liquid using the estimated filter resistance.

According to another preferred embodiment, the at least one air aspiration comprises aspiration using ambient air, pure oxygen, nitrogen or other gas or mixtures thereof. Preferably, ambient air at room temperature is used.

One aspect of the invention relates to methods of detecting a defective or missing filter using the methods described herein. Specifically, using the measured filter resistance to determine whether filter is missing, defective, not properly set within pipet or other defects.

Another embodiment relates to a method of pipetting an amount of a liquid using a pipet having an interior volume and a disposable pipet tip having a filter enclosing the interior volume, wherein the filter has a filter resistance, the method comprising:

(a) performing at least one air aspiration of the pipet with defined pipetting parameters and measuring air pressure in the interior volume of the pipet;
(b) estimating the filter resistance of the filter of the disposable pipet tip using the measured air pressure and the defined pipetting parameters;
(c) dispensing the liquid with defined pipetting parameters and measuring liquid dispensing pressure in the interior volume of the pipet;
(d) correcting the liquid dispensing pressure using the estimated filter resistance of the pipet and the defined pipetting parameters; and, preferably,
(e) using the corrected liquid dispensing pressure to determine if the pipetting of the amount of the liquid was acceptable or unacceptable.

Another embodiment relates to a method of pipetting an amount of a liquid using a pipet having an interior volume and a disposable pipet tip having a filter enclosing the interior volume, wherein the filter has a filter resistance, the method comprising:

(a) performing at least one air aspiration of the pipet with defined pipetting parameters and measuring air pressure in the interior volume of the pipet;
(b) estimating the filter resistance of the filter of the disposable pipet tip using the measured air pressure and the defined pipetting parameters; and
(c) performing aspiration of the liquid with defined pipetting parameters and measuring liquid aspiration pressure in the interior volume of the pipet.

According to an alternative embodiment, instead of subtracting the pressure drop generated by the filter, a deviation/difference from a predefined reference pressure drop can be calculated and subtracted. This is helpful if a large set of pressure data already exists without filter calibration.

Using this predefined reference pressure drop, the newly acquired data with deviating filter pressure can be corrected to the mean of the already existing data set. This allows reusing the existing parameters of the pipetting surveillance.

Accordingly, one preferred alternative embodiment relates to methods comprising:

(a) performing at least one air aspiration of the pipet with defined pipetting parameters and measuring air pressure in the interior volume of the pipet;
(b) estimating the deviation of the filter resistance of the filter of the disposable pipet tip from the predefined reference pressure drop using the measured air pressure and the defined pipetting parameters;
(c) performing aspiration of the liquid with defined pipetting parameters and measuring liquid aspiration pressure in the interior volume of the pipet; and
(d) correcting the liquid aspiration pressure using the estimated deviation of the filter resistance of the pipet and the defined pipetting parameters.

Preferably, the method further comprises using the corrected liquid aspiration pressure to determine if the pipetting of the amount of the liquid was acceptable or unacceptable.

Another aspect of the invention relates to systems and subsystems configured to perform the methods described herein including the additional process step of performing at least one air aspiration of the pipet with defined pipetting parameters and measuring air pressure in the interior volume of the pipet.

According to one embodiment, the system is programmed or reprogrammed to perform the additional process step(s).

According to another embodiment, the system is programmed or re-programed to perform the following process steps:

*Algorithm 1*:

Step 1: Receive request to perform method comprising calibrating a pipet.
Step 2: Store received request.

*Algorithm 2:*

Step 1: Perform at least one air aspiration of pipet with defined pipetting parameters and measure air pressure in the interior volume of the pipet.
Step 2: Store measured air pressure.

*Algorithm 3:*

Step 1: Estimate filter resistance of filter of disposable pipet tip using the measured air pressure and the defined pipetting parameters.
Step 2: Store estimate of filter resistance of the filter of the disposable pipet tip.

*Algorithm 4:*

Step 1: Perform aspiration of a liquid with defined pipetting parameters and measuring liquid aspiration pressure in the interior volume of the pipet.
Step 2: Store measured liquid aspiration pressure.

*Algorithm 5:*

Step 1: Correct the liquid aspiration pressure using the estimated filter resistance of the pipet tip and defined pipetting parameters.
Step 2: Store the corrected liquid aspiration pressure.

*Algorithm 5:*

Step 1: Perform analysis of corrected liquid aspiration pressure to determine if the pipetting of the amount of the liquid was acceptable or unacceptable.
Step 2: Store determination of whether the pipetting of the amount of the liquid was acceptable or unacceptable.

According to another embodiment, the system is programmed or reprogrammed to perform the alternative method process step(s).

*Alternate Algorithm 1:*

Step 1: Receive request to perform method comprising calibrating a pipet.
Step 2: Store received request.

*Alternate Algorithm 2:*

Step 1: Perform at least one air aspiration of pipet with defined pipetting parameters and measure air pressure in the interior volume of the pipet.
Step 2: Store measured air pressure.

*Alternate Algorithm 3:*

Step 1: Estimate the deviation of the filter resistance of filter of disposable pipet tip from the predefined reference pressure drop using the measured air pressure and the defined pipetting parameters.
Step 2: Store estimated deviation of filter resistance of the filter of the disposable pipet tip.

*Alternate Algorithm 4:*

Step 1: Perform aspiration of a liquid with defined pipetting parameters and measuring liquid aspiration pressure in the interior volume of the pipet.
Step 2: Store measured liquid aspiration pressure.

*Alternate Algorithm 5:*

Step 1: Correct the liquid aspiration pressure using the estimated deviation of filter resistance of the pipet tip and defined pipetting parameters.
Step 2: Store the corrected liquid aspiration pressure.

*Alternate Algorithm 6:*

Step 1: Perform analysis of corrected liquid aspiration pressure to determine if the pipetting of the amount of the liquid was acceptable or unacceptable.
Step 2: Store determination of whether the pipetting of the amount of the liquid was acceptable or unacceptable.

In the description above, for purposes of explanation only, specific nomenclature is set forth to provide a thorough understanding of the present disclosure. However, it will be apparent to one skilled in the art that these specific details are not required to practice the teachings of the present disclosure.
Some portions of the detailed descriptions herein are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.
It should be borne in mind, however, that all of these and similar terms are to be associated with the appropriate physical quantities and are merely convenient labels applied to these quantities. Unless specifically stated otherwise as apparent from the below discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.
The present disclosure also relates to an apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk, including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms presented herein are not inherently related to any particular computer or other apparatus. Various general purpose systems, computer servers, or personal computers may be used with programs in accordance with the teachings herein, or it may prove convenient to construct a more specialized apparatus to perform the required method steps. The required structure for a variety of these systems will appear from the description herein. It will be appreciated that a variety of programming languages may be used to implement the teachings of the disclosure as described herein.

Moreover, the various features of the representative examples and the dependent claims may be combined in ways that are not specifically and explicitly enumerated in order to provide additional useful embodiments of the present teachings. It is also expressly noted that all value ranges or indications of groups of entities disclose every possible intermediate value or intermediate entity for the purpose of original disclosure, as well as for the purpose of restricting the claimed subject matter. It is also expressly noted that the dimensions and the shapes of the components shown in the figures are designed to help to understand how the present teachings are practiced, but not intended to limit the dimensions and the shapes shown in the examples. The scope of the present devices, systems and methods, etc., includes both means plus function and step plus function concepts. However, the claims are not to be interpreted as indicating a "means plus function" relationship unless the word "means" is specifically recited in a claim, and are to be interpreted as indicating a "means plus function" relationship where the word "means" is specifically recited in a claim. Similarly, the claims are not to be interpreted as indicating a "step plus function" relationship unless the word "step" is specifically recited in a claim, and are to be interpreted as indicating a "step plus function" relationship where the word "step" is specifically recited in a claim.

It is understood that the embodiments described herein are for the purpose of elucidation and should not be considered limiting the subject matter of the disclosure.

## Claims

1. A method of pipetting an amount of a liquid using a pipet having an interior volume and a disposable pipet tip having a filter enclosing the interior volume, wherein the filter has a filter resistance, the method comprising:

   (a) performing at least one air aspiration of the pipet with defined pipetting parameters and measuring air pressure in the interior volume of the pipet;

   (b) estimating the filter resistance of the filter of the disposable pipet tip using the measured air pressure and the defined pipetting parameters;
   (c) performing aspiration of the liquid with defined pipetting parameters and measuring liquid aspiration pressure in the interior volume of the pipet;
   (d) correcting the liquid aspiration pressure using the estimated filter resistance of the pipet and the defined pipetting parameters; and
   (e) using the corrected liquid aspiration pressure to determine if the pipetting of the amount of the liquid was acceptable or unacceptable.

2. A method of pipetting an amount of a liquid using a pipet having an interior volume and a disposable pipet tip having a filter enclosing the interior volume, wherein the filter has a filter resistance, the method comprising:

   (a) performing at least one air aspiration of the pipet with defined pipetting parameters and measuring air pressure in the interior volume of the pipet;
   (b) estimating the filter resistance of the filter of the disposable pipet tip using the measured air pressure and the defined pipetting parameters;
   (c) dispensing the liquid with defined pipetting parameters and measuring liquid dispensing pressure in the interior volume of the pipet;
   (d) correcting the liquid dispensing pressure using the estimated filter resistance of the pipet and the defined pipetting parameters; and
   (e) using the corrected liquid dispensing pressure to determine if the pipetting of the amount of the liquid was acceptable or unacceptable.

3. A method of pipetting an amount of a liquid using a pipet having an interior volume and a disposable pipet tip having a filter enclosing the interior volume, wherein the filter has a filter resistance, the method comprising:

   (a) performing at least one air aspiration of the pipet with defined pipetting parameters and measuring air pressure in the interior volume of the pipet;
   (b) estimating the filter resistance of the filter of the disposable pipet tip using the measured air pressure and the defined pipetting parameters; and
   (c) performing aspiration of the liquid with defined pipetting parameters and measuring liquid aspiration pressure in the interior volume of the pipet.

4. The method of claim 2, wherein said defined pipetting parameters includes acceleration and velocity.

5. The method of claim 2, wherein said performing at least one air aspiration is at a selected acceleration and velocity to measure the filter resistance.

6. The method of claim 2, wherein the filter is an aerosol filter.

7. The method of claim 2, wherein the liquid is from a sample and the filter is configured to avoid sample cross contamination.

8. The method of claim 2, further comprising processing the liquid in the interior volume of the pipet.

9. The method of claim 2, further comprising mixing the liquid in the interior volume of the pipet.

10. The method of claim 2, wherein said performing at least one air aspiration comprises reaching a constant air aspiration velocity with the pipet and a constant air flow velocity through the filter.

11. The method of claim 2, wherein said measuring air pressure in the interior volume of the disposable pipet is performed using at least one pressure sensor.

12. The method of claim 2, further comprising calibrating the aspiration of the liquid using the estimated filter resistance.

13. The method of claim 2, wherein the at least one air aspiration comprises aspiration using ambient air, pure oxygen, nitrogen or other gas or mixtures thereof.

14. The method of claim 2, further comprising detecting a defective or missing filter.

15. A system for performing sample pipetting of liquid samples, wherein the system is configured to perform the method of claim 2.

Fig. 1

Fig. 2

**Fig. 3**

Velocity Dependent Pressure Drop from Filter

Fig. 4

Europäisches
Patentamt

European
Patent Office

Office européen
des brevets

**EUROPEAN SEARCH REPORT**

Application Number

EP 24 15 8631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 386 389 A1 (TECAN TRADING AG [CH]) 19 June 2024 (2024-06-19) * paragraphs [0006] - [0014]; figures 1-2 * * paragraph [0041] - paragraph [0084] * ----- | 1-15 | INV. G01N35/10 |
| A | US 2014/373596 A1 (WANG JIANFANG [US] ET AL) 25 December 2014 (2014-12-25) * paragraph [0008] - paragraph [0010]; figure 4 * * paragraph [0035] - paragraph [0052] * ----- | 1-15 | |

TECHNICAL FIELDS
SEARCHED      (IPC)

G01N
B01L

The present search report has been drawn up for all claims

| Place of search | Date of completion of the search | Examiner |
|---|---|---|
| The Hague | 3 August 2024 | Werth, Jochen |

EPO FORM 1503 03.82 (P04C01)

**EP 4 607 204 A1**

## ANNEX TO THE EUROPEAN SEARCH REPORT
## ON EUROPEAN PATENT APPLICATION NO.

EP 24 15 8631

03-08-2024

| Patent document cited in search report | | Publication date | Patent family member(s) | | Publication date |
|---|---|---|---|---|---|
| EP 4386389 | A1 | 19-06-2024 | CN | 118191224 A | 14-06-2024 |
| | | | EP | 4386389 A1 | 19-06-2024 |
| | | | EP | 4386390 A1 | 19-06-2024 |
| | | | US | 2024201219 A1 | 20-06-2024 |
| US 2014373596 | A1 | 25-12-2014 | EP | 2802848 A1 | 19-11-2014 |
| | | | US | 2014373596 A1 | 25-12-2014 |
| | | | WO | 2013106457 A1 | 18-07-2013 |

EPO FORM P0459